# EUROPEAN PATENT SPECIFICATION

(11) **EP 1 708 379 B1**
(45) Date of publication and mention of the grant of the patent: **06.05.2009**
(21) Application number: 05706660.7
(22) Date of filing: 25.02.2005
(51) Int. Cl.: H04B 1/74, H04L 29/14, H04B 10/00, H04L 1/22, G06F 11/20, H04Q 3/545, H04J 3/14

(54) **COMMUNICATION SYSTEM HAVING BACKUP FUNCTION FOR SEVERAL SERIES DEVICES AND METHOD FOR CARRYING OUT THE FUNCTION OF SWITCHING**
KOMMUNIKATIONSSYSTEM MIT BACKUPFUNKTION FÜR MEHRERE SERIENVORRICHTUNGEN UND VERFAHREN ZUR AUSFÜHRUNG DER SCHALTFUNKTION
SYSTEME DE COMMUNICATION A FONCTION DE SECOURS POUR PLUSIEURS DISPOSITIFS SERIE, ET PROCEDE POUR L'EXECUTION DE LA FONCTION DE COMMUTATION

(30) Priority: 25.02.2004 CN 200410007591
(43) Date of publication of application: 04.10.2006
(73) Proprietor: Huawei Technologies Co., Ltd., Longgang District, Shenzhen, Guangdong Province 518129 (CN)
(72) Inventor: WU, Haijun, Shenzhen, Guangdong 518129 (CN)
(74) Representative: Manitz, Finsterwald & Partner GbR
(86) International application number: PCT/CN2005/000232
(87) International publication number: WO 2005/083899

(56) References cited:
- EP-A- 1 133 197
- WO-A-03/026192
- CN-A- 1 373 427
- CN-A- 1 471 243
- JP-A- 2003 273 805

## Description

### Field of the invention

The present invention relates to backup and Active/Standby switchover technology of communication devices, and more particularly, to a communication system of cascaded devices with a backup function and an Active/Standby switchover method thereof.

### Background of the invention

Device backup and Active/Standby switchover are necessary functions for a communication system to maintain long term reliable operations. At present, many communication systems adopt cascade structure, for instance: a Digital Subscriber Line (DSL) access system can be cascaded by a plurality of Digital Subscriber Line Access Multiplexers (DSLAMs), and in different DSL access systems, most DSLAMs have a backup function and Active/Standby switchover function, but some DSLAMs do not.

A DSLAM is a kind of frequently used device in a broadband access network and can be divided into two types in terms of the structure, which includes a frame DSLAM and a box DSLAM. The two kinds of DSLAMs both consist of three parts commonly: a main control board, user interface board, and backboard. The main control board provides a control function of the system, data stream process/distribution function, convergence function, uplink network side interface, and so on. The frame DSLAM access device usually has two main control boards to provide the Active/Standby switchover function. The user interface board provides an access interface for the user externally, and different user interface boards provide different access manners, such as Asynchronous Digital Subscriber Line (ADSL), Very high bit-rate Digital Subscriber Line (VDSL), Ethernet, G. Simple-pair High-speed Digital Subscriber Line (G. shdsl), etc. Generally, a DSLAM can provide more than one user interface board at the same time, a backboard can provide connections between the main control board and user interface board, wherein, the main control board and user interface board are both fixed at a slot of the backboard which usually provides a data bus for transmitting data between the main control board and user interface board.

The simplest cascade method of the DSL access system is two-level cascade. The box broadband access device is seldom applied at present, wherein a plurality of DSLAMs are cascaded through optical interfaces and each set of DSLAMs only supports one main control board, thus Active/Standby switchover function can not be provided. While the frame broadband access device is widely used, and especially, two application cases are provided as follows. One is that only the primary frame supports Active/Standby switchover, and the other is that both the primary and slave frames support Active/Standby switchover. The primary frame refers to a frame of which output interface is directly connected to the service network, and a slave frame refers to a frame that is connected to the service network through the primary frame. In other words, the primary frame and slave frame are cascaded. Situations of the two Active/Standby switchover methods will be respectively illustrated with reference to the two-level cascade.

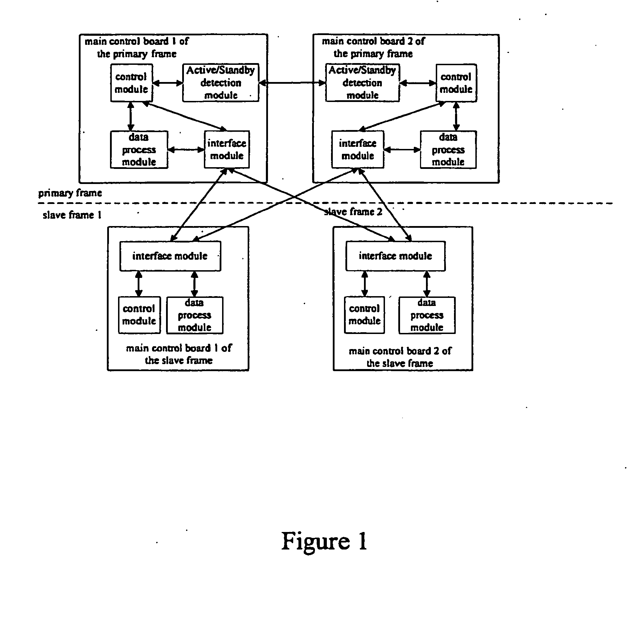

As shown in Figure 1, Figure 1 is a schematic diagram illustrating device cascade in a system where only the primary frame supports Active/Standby switchover in the prior art (This Figure only shows main control boards of a primary frame and those of a slave frame, while other boards are not shown herein). Wherein the primary frame cascades two slave frames including frames 1 and 2. The primary frame contains main control boards 1 and 2 of the primary frame, which are a backup for each other, wherein the slave frame 1 includes a main control board of the slave frame 1, and the slave frame 2 includes a main control board of the slave frame 2.

The structures of the main control board 1 of the primary frame and main control board 2 of the primary frame are completely the same and both include: a control module, data process module, interface module, and Active/Standby detection module. Wherein, the control module is for accomplishing the whole system's software process and control, mainly including components like CPU and memory as well as software. The data process module is in charge of data forward and process, which is completed by hardware switching, forward logic, or chips. The interface module is for implementing external physical interfaces, such as interfaces of Fast Ethernet (FE), Gigabit Ethernet (GE), Asynchronous Transfer Mode (ATM), and so on, which can be either optical or electric interfaces. The Active/Standby detection module is used to detect the other main control board in real-time. The Active/Standby detection module detects the hardware state of the other main control board by detecting the on-site signal of the other main control board, and generates and sends the Active/Standby state signal of the local board to the control module of the local board according to the detection result. If an invalid on-site signal of the other main control board is detected, namely, this main control board is pulled out or breaks down, the Active/Standby state signal of the local board shall be set as an active state signal; otherwise, the Active/Standby state signal of the local board shall be set as a standby state signal. The control module performs Active/Standby switchover according to this Active/Standby state signal. Wherein, the Active/Standby state signal of the local board can also be set by the control module of the local board.

The structure of the main control board of the slave frame 1 is completely the same as that of the main control board of the slave frame 2. Because the slave frame has a main control board, both of the main control board of the slave frame 1 and the main control board of the slave frame 2 contain only: a control module, data process module, and interface module.

In Figure 1, only the primary frame performs Active/Standby switchover, while the main control board of the slave frame provides two interfaces that are respectively connected to the two boards of active and standby main control boards of the primary frame. In this case, the slave frame does not have an Active/Standby switchover capability, which will lead to a severe drop in the reliability of the communication system.

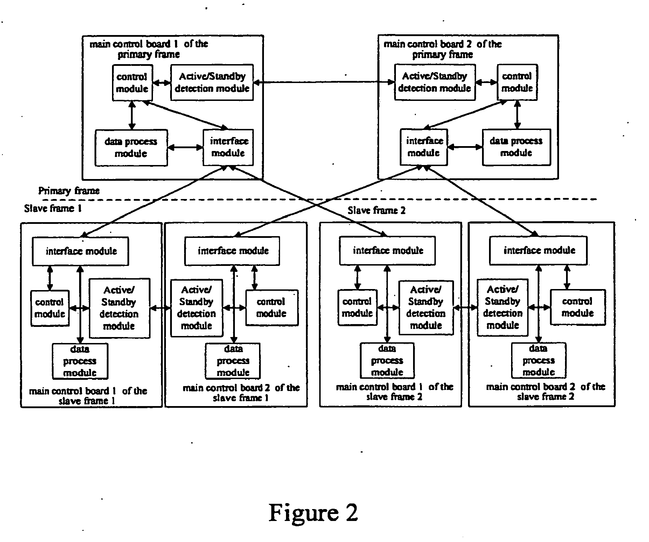

With reference to Figure 2, it is a schematic diagram illustrating device cascaded in a system where both the primary frame and slave frame support Active/Standby switchover in the prior art. (This figure only shows main control boards of the primary frame and slave frames, while other boards are not shown herein). Therein, the primary frame cascades two slave frames including slave frame 1 and slave frame 2. The primary frame includes a main control board 1 of the primary frame and a main control board 2 of the primary frame, which are a backup board for each other. The slave frame 1 contains a main control board 1 of the slave frame 1 and main control board 2 of the slave frame 1, and the slave frame 2 includes a main control board 1 of the slave frame 2 and main control board 2 of the slave frame 2.

In Figure 2, structures of various main control boards are completely the same as that of the main control board of the primary frame in Figure 1, which is not to be illustrated herein. Because both the main control boards of the primary frame and slave frame support Active/Standby switchover, and the two main control boards of the primary frame are respectively connected to the two main control boards of the slave frame, only gapping switchover can be implemented. Gapping switchover means that the Active/Standby switchover of any frame's main control board will lead to the Active/Standby switchover of all the frame's main control boards. In this scheme, the two main control boards of every frame are divided into two parts of a main part and standby part, so corresponding protocols have to be supported between the frames during the implementation of the switchover. In addition, the switchover of a frame's main control board leads to the switchover of all the systems', which makes stable time and service interrupt time of the whole cascade system too long.

EP-A-1 133 197 discloses a method applicable for a narrowband switch system, which achieves a collaboration between a high level module and multiple sub-modules as well as function protection by controlling a switch.

WO 03/026192 A discloses a method for establishing at least one failsafe communication link by a communication system in a communication network, including: providing a plurality of access units in the communication system and assigned to one another; connecting a plurality of redundant transmission lines to each access unit for establishing the communication link; transmitting communication-link-specific information over a transmission line and an access unit associated with the transmission line to establish the communication link; providing control functions in each access unit for controlling communication system-specific functions implemented in the communication system and/or for controlling access-specific functions implemented in the associated access units; and in event of failure of at least a part of the control functions in one of the access units, controlling the failed communication system-specific and/or access unit-specific functions by the control function of the at least one assigned access unit.

### Summary of the invention

The first main object of the present invention is to provide a communication system of cascaded devices with a backup function, wherein the system can realize Active/Standby switchover on levels and is of high reliability and stability.

The second main object of the present invention is to provide an Active/Standby switchover method of a communication system of cascaded devices to implement Active/Standby switchover on levels and be of high reliability and stability

In accordance with the first object mentioned above, the present invention provides a communication system of devices cascaded with a backup function, at least including communication devices of various levels, each communication device at least including an active main control board and a standby main control board, and having an Active/Standby switchover function, wherein the communication system further includes a line adapter with multiple inputs and multiple outputs,
a first active main control board of the communication device in each level is connected to a second active main control board and a second standby main control board of an adjacent-level communication device through the line adapter, and a first standby main control board of the communication device in each level is connected to the second active main control board and the second standby main control board of the adjacent-level communication device through the line adapter; and
a port in any active main control board which is connected to a first port of the line adapter is enabled while a port in any standby main control board which is connected to the line adapter is disabled.

In the above solution, the line adapter may be an optical line adapter or electric line adapter.

In the above solution, the communication system is a Digital Subscriber Line (DSL) access system, the communication device may be a Digital Subscriber Line Access Multiplexer (DSLAM), and the line adapter may be an optical line adapter.

In the above solution, the optical line adapter may be an independent device which is separated from the DSLAM.

In the above solution, the optical line adapter is a part of the DSLAM,

In the above solution, the optical line adapter may be set in an active main control board or standby main control board of the DSLAM.

In the above solution, the number of the ports of the optical line adapter may be no less than the number of the ports of interface modules in active main control boards and standby main control boards of two adjacent levels.

In the above solution, the optical line adapter may include at least one independent optical splitting modules with multiple input ports and multiple output ports; or the optical line adapter may include at least one optical splitting modules with multiple input ports and a single output port and/or optical splitting modules with multiple input ports and multiple output ports.

In accordance with the second object mentioned above, the present invention provides two Active/Standby switchover methods of a communication system of cascaded devices.

The first Active/Standby switchover method of a communication system of cascaded devices include: Active/Standby switchover being finished inside a communication device, an active main control board and standby main control board of the communication device detecting the hardware state of each other in real time, and the switchover procedure including:
when detecting that the active main control board has been pulled out or broken down, the standby main control board promoting its local Active/Standby state as active; and
the standby main control board enabling its port which is connected to a port of the line adapter according to the Active/Standby state to switchover the standby main control board as an active main control board.

In the above solution, either the active main control board or the standby main control board may detect the hardware state of each other through its own Active/Standby detection module; the step of the standby main control board promoting its local Active/Standby state as active may include: the standby main control board setting its own Active/Standby state signal as active and sending this signal to the control module of the standby main control board; and the step of the standby main control board enabling its port which is connected to the port of the line adapter according to the Active/Standby state to switchover the standby main control board as an active main control board may include: the control module of the standby main control board real-timely detecting its local Active/Standby state signal, and if this signal is active, enabling the standby main control board's port which is connected to the line adapter to switchover the local board as an active main control board.

In the above solution, the communication system is a DSL access system, the communication device may be a DSLAM; the line adapter may be an optical line adapter, and the port of the standby main control board which is connected to the part of the line adapter may be an optical interface.

The second Active/Standby switchover method of a communication system of cascaded devices includes: Active/Standby switchover being finished inside a communication device including an active main control board and standby main control board, and the switchover procedure including:
the active main control board confirming that Active/Standby switchover is needed;
the active main control board notifying the standby main control board that Active/Standby switchover is needed; and setting its local Active/Standby state as standby;
according to the notification from the active main control board, the standby main control board setting its local Active/Standby state as active;
the active main control board disabling its port which is connected to a first port of the line adapter to switchover the active main control board as a standby main control board according to the local Active/Standby state; and
the standby main control board enabling its port which is connected to a second port of the line adapter to switchover the standby main control board as an active main control board according to the current local Active/Standby state.

In the above solution, the step of the active main control board setting its local Active/Standby state as standby may include: setting the Active/Standby state of the Active/Standby detection module in the active main control board as standby; the step of the standby main control board setting its local Active/Standby state as active may include: setting the Active/Standby state of the Active/Standby detection module in the standby main control board as active; the step of the active main control board disabling its port which is connected to the first port of the line adapter according to the local Active/Standby state may include: the control module of the active main control board detecting its local Active/Standby state signal real-timely, and disabling its port which is connected to the first port of the line adapter if this signal is standby; and the step of the standby main control board enabling its port which is connected to the second port of the line adapter according to the local Active/Standby state may include: the control module of the standby main control board detecting its local Active/Standby state signal real-timely, and enabling its port which is connected to the second port of the line adapter if this signal is active.

In the above solution, the communication system is a DSL access system, the communication device may be a DSLAM, the line adapter may be an optical line adapter, and the ports of the active and standby main control boards which are connected to the first and second ports of the line adapter are optical interfaces.

It can be seen from the above-illustrated technical scheme that, line adapters are added to the communication system in the present invention, and adjacent-level communication devices are cascaded through a line adapter. When a main control board of a communication device of a certain level is implementing Active/Standby switchover, by performing on-off control upon the interfaces of this communication device connected to the line adapter, it is guaranteed that the communication device of an adjacent-level of this communication device does not have to undertake Active/Standby switchover. In this way, the present invention implements that the active and standby main control boards of various levels can respectively undertake the switchover operation flexibly, so that the gapping switchover scheme is not needed anymore in realizing Active/Standby switchover among communication devices of different levels. And the present invention can also make sure that main control board in communication devices of each level can implement a backup function. The present invention may resolve the problem of Active/Standby switchover of cascaded devices in the system and greatly improve the reliability and stability of Active/Standby switchover in the system.

### Brief description of the drawings

Figure 1 is a schematic diagram illustrating device cascade in a system where only the primary frame supports Active/Standby switchover in the prior art;
Figure 2 is a schematic diagram illustrating device cascade in a system where both the primary frame and slave frame support Active/Standby switchover in the prior art;
Figure 3 is a schematic diagram illustrating device cascade in a system in an embodiment of the present invention;
Figure 4 is a schematic diagram illustrating the structure and connection of another kind of optical line adapters in the embodiment shown in Figure 3;
Figure 5 is a schematic diagram illustrating the first position of an optical line adapter in a DSLAM in the embodiment shown in Figure 3;
Figure 6 is a schematic diagram illustrating the second position of an optical line adapter in a DSLAM in the embodiment shown in Figure 3;
Figure 7 is a schematic diagram illustrating optical paths when a main control board in a primary frame is normal in the embodiment shown in Figure 3;
Figure 8 is a flowchart illustrating the first Active/Standby switchover method of a main control board in the embodiment shown in Figure 3;
Figure 9 is a flowchart illustrating the second Active/Standby switchover method of a main control board in the embodiment shown in Figure 3;
Figure 10 is a schematic diagram illustrating optical paths after the Active/Standby switchover of a main control board in a primary frame in the embodiment shown in Figure 3.

### Detailed description of preferred embodiments

The present invention will be described in detail hereinafter with reference to the accompanying drawings.

The key idea of the communication system of cascaded devices with a backup function and the Active/Standby switchover method thereof in accordance with the present invention includes: adding line adapters in the communication system by which adjacent-level communication devices are cascaded, and when a main control board of a certain level communication device is performing Active/Standby switchover, by performing on-off control upon interfaces connected to the line adapters of this communication device, it is guaranteed that the adjacent-level communication devices of this communication device need not perform the Active/Standby switchover of a main control board.

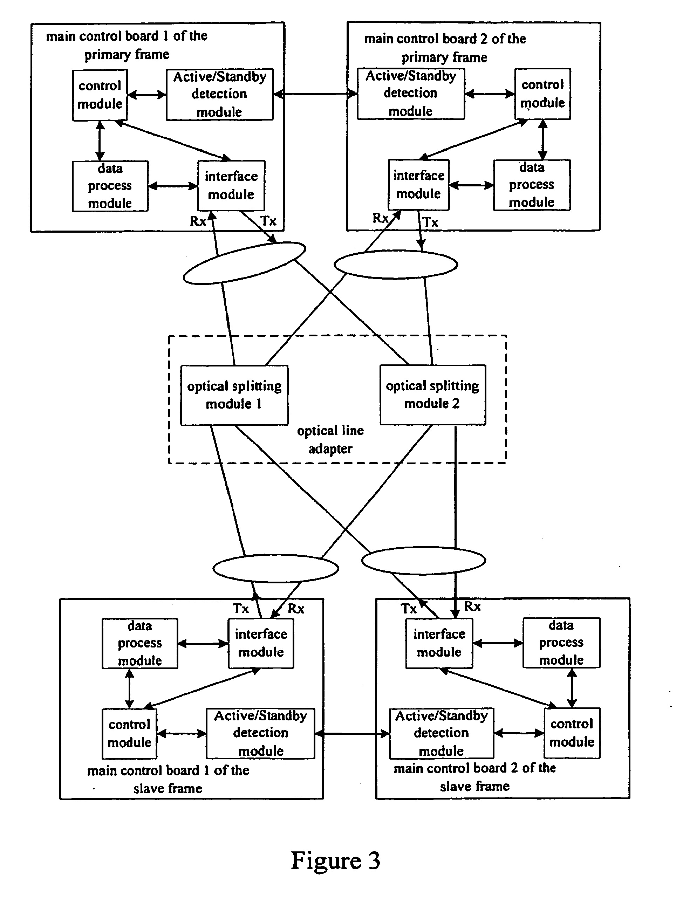

With reference to Figure 3, it is a schematic diagram illustrating device cascade in a system of an embodiment of the present invention. This embodiment refers to a broadband access system constituted by DSLAMs cascaded through optical fibers. Figure 3 shows how the two DSLAMs of a primary frame and those of a slave frame are cascaded through an optical line adapter. Therein, the primary frame includes a main control board 1 of the primary frame and a main control board 2 of the primary frame, and the slave frame includes a main control board 1 of the slave frame and a main control board 2 of the slave frame. The structure and connection of the two main control boards of the primary fame and that of the two main control boards of the slave frame are the same as that shown in Figure 2, which are not to be illustrated repeatedly herein.

### Cascade manners of the two frames will be illustrated hereinafter:

The DSLAM of the primary frame and that of the slave frame in this embodiment are cascaded by an optical line adapter. An optical interface of an interface module includes a receiving optical fiber, RX, and a transmitting optical fiber, TX. So the optical line adapter in the embodiment consists of two independent 2-input/2-output modules of an optical splitting module 1 and optical splitting module 2.

An optical splitting module is a kind of passive optical parts frequently used, for completing optical signal synthesis and distribution, of which working principle is: by synthesizing multiple inputs of optical signals into one optical signal according to a configured ratio and distributing this optical signal to multiple outputs according to the configured ratio. The two parts of functions can be either implemented separately or implemented in one module, i.e., the optical splitting module may be a many-to-one module or many-to-many module. Optical splitters can be classified according to different optical splitting ratios, the wavelength of the optical fiber interface, and the number of input/output ports.

The optical splitting ratio of both the optical splitting module 1 and optical splitting module 2 in the present embodiment is 50/50, and the number of input/output ports of both the optical splitting module 1 and optical splitting module 2 are 2 input ports and 2 output ports. Signals from the two input optical interfaces of this kind of optical splitting module are synthesized into one optical signal which is then split into two signals, each of which is 50% of the synthesized signal, and the two signals are output through the two output ports respectively. The wavelength of the optical fiber interface should be selected according to different types of optical interfaces, like a wavelength of 1310nm etc.

As shown in Figure 3, the two output ports of the optical splitting module 1 are respectively connected to the interface module's RX of the main control board 1 and that of the main control board 2, wherein the main control boards 1 and 2 are both a main control board of the primary frame; the two input ports of the optical splitting module 1 are respectively connected to the interface module's TX of the main control board 1 and that of the main control board 2, wherein the main control boards 1 and 2 are both a main control board of the slave frame; the two input ports of the optical splitting module 2 are respectively connected to the interface module's TX of the main control board 1 and that of the main control board 2, wherein the main control boards 1 and 2 are both a main control board of the primary frame; and the two output ports of the optical splitting module 2 are respectively connected to the interface module's RX of the main control board 1 and that of the main control board 2, wherein the main control boards 1 and 2 are both a main control board of the slave frame. That is to say, the main control boards 1 and 2 of the slave frame transmit information through the optical splitting module 1, and the main control boards 1 and 2 of the primary frame receive information through the optical splitting module 2.

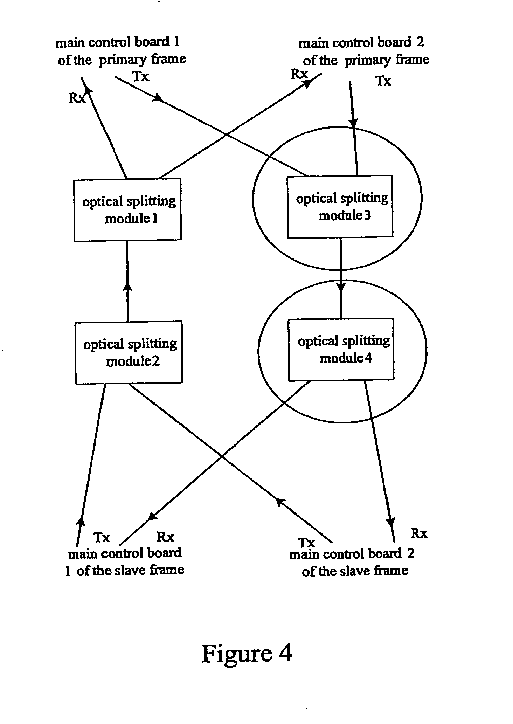

Besides, the optical line adapter of the present invention can also be implemented by two 2-input/1-output optical splitting modules and two 1-input/2-output optical splitting modules, of which the structure is shown in Figure 4. Figure 4 is a schematic diagram illustrating the structure and connection of another kind of optical line adapters in the embodiment shown in Figure 3. This optical line adapter is implemented by combing two 1-input/2-output modules including the optical splitting modules 1 and 4 as well as two 2-input/1-output modules including the optical splitting modules 2 and 3. Therein, the two outputs of the optical splitting module 1 are respectively connected to the interface modules' RXes of the primary frame's main control boards 1 and 2, and the input of the optical splitting module 1 is connected to the output of the optical splitting module 2; and the two inputs of the optical splitting module 2 are respectively connected to the interface modules' TXes of the slave frame's main control boards 1 and 2. The two inputs of the optical splitting module 3 are respectively connected to the interface modules' TXes of the primary frame's main control boards 1 and 2, and the output of the optical splitting module 3 is connected to the input of the optical splitting module 4; and the two outputs of the optical splitting module 4 are respectively connected to the interface modules' RXes of the slave frame's main control boards 1 and 2.

In practical application, if there are too many cascaded devices of slave frames, the solution in accordance with the invention can be implemented by selecting multiple-input/multiple-output optical splitting modules according to the total number of the main control boards and that of the optical interfaces in each slave frame, or by combining the multiple-input/multiple-output optical splitting modules or/and multiple-input/single-output optical splitting modules together. It must be ensured that the input/output port number of the line adapter are no less than the port number of the interface modules in the primary and standby main control boards of two adjacent levels, in other words, it must be guaranteed that each of the primary and standby main control boards in an level can be connected to any of the primary and standby main control boards in its lower level.

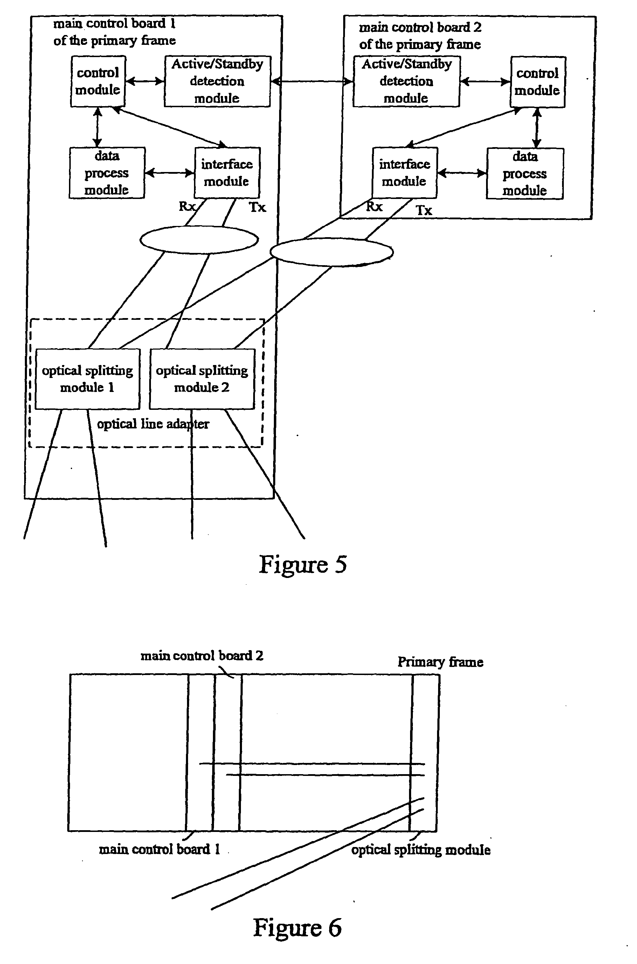

The optical line adapter in the present embodiment can be set as an independent device, or be integrated in a certain main control board, or be located inside a DSLAM frame as an independent single board. When the optical line adapter is integrated in a certain main control board, as shown in Figure 5, the optical line adapter may be selected to be integrated in an active main control board or in a standby main control board; and when the optical line adapter is located inside a DSLAM frame, as shown in Figure 6, the optical line adapter may be selected to be located inside a primary DSLAM frame.

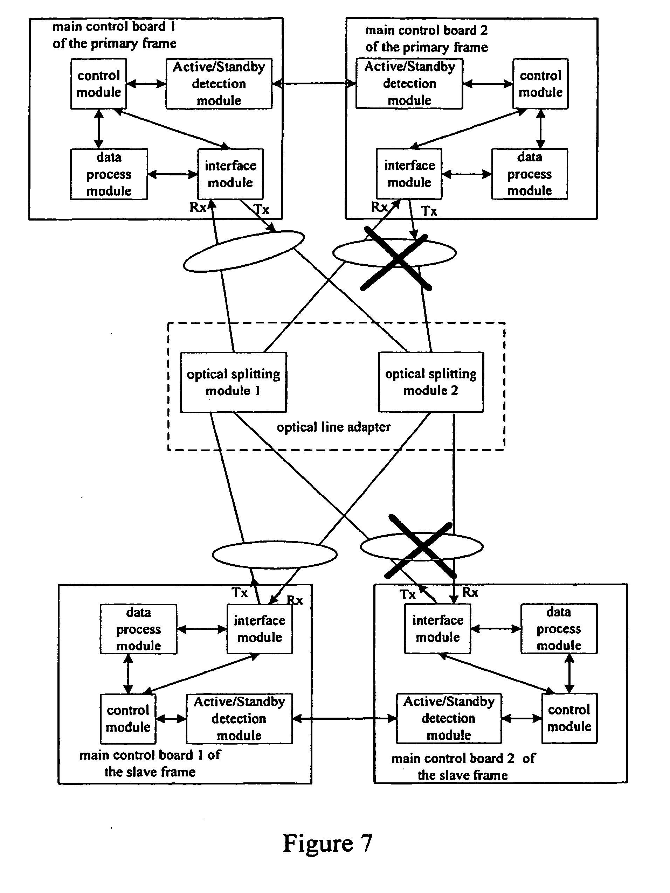

Suppose that, in Figure 3, in the primary frame, the main control board 1 is an active main control board, the main control board 2 is a standby main control board, and the interface module's optical interface in the main control board 1 is open while that of the main control board 2 is closed; and in the slave frame the main control board 1 is an active main control board, the main control board 2 is a standby main control board, and the interface module's optical interface in the main control board 1 is open while that of the main control board 2 is closed. Based on the above conditions, the optical path when the primary frame's main control boards are normally operating is shown in Figure 7 which is a schematic diagram illustrating the optical path when the main control boards in the primary frame is in normal operation in the embodiment shown in Figure 3. The optical splitting module 1 connects the interface module's RX of the primary frame's main control board 1 to the interface module's TX of the slave frame's main control board 1; and the optical splitting module 2 connects the interface module's TX of the primary frame's main control board 1 to the interface module's RX of the slave frame's main control board 1. In this way, optical signals are transmitted between the primary frame's main control board 1 and the slave frame's main control board 1. Because the optical interface of interface module has been closed, there is no optical signal transmitted between the primary frame's main control board 2 and the slave frame's main control board 2.

There are two ways to implement the Active/Standby switchover of the main control board in the present embodiment: the first way is to implement Active/Standby switchover through detecting the active main control board by the standby main control board. The second way is that the active main control board notifies the standby main control board to perform the Active/Standby switchover. The two ways are respectively illustrated as follows:

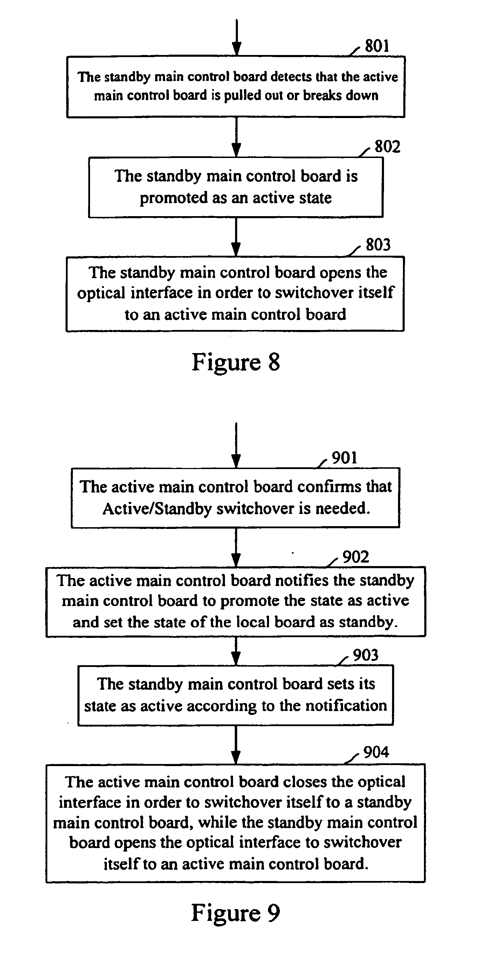

The first Active/Standby switchover method includes: completing Active/Standby switchover inside each communication device, and the active main control board and standby main control board of each communication device detecting the hardware state of each other in real time, wherein the switchover procedure is as shown in Figure 8. Figure 8 is a flowchart illustrating the first Active/Standby switchover method of main control boards in the embodiment shown in Figure 3. This procedure includes the following steps:
Step 801: The standby main control board detects that the active main control board has been pulled out or broken down.

This step is implemented by detecting the on-site signals by an Active/Standby detection module of the active main control board and that of the standby main control board. The Active/Standby detection module is used to detect the state of the other main control board real-timely. The Active/Standby detection module detects the hardware state of the other main control board by detecting the on-site signal thereof, generates an Active/Standby state signal of the local board based on the detecting result, and sends this signal to the control module of the local board. If an invalid on-site signal of the other main control board has been detected, i.e., this main control board has been pulled out or broken down, the Active/Standby state signal of the local board will be promoted as an active state signal; otherwise, the Active/Standby state signal of the local board is set in a standby state. The control module will perform Active/Standby switchover according to this Active/Standby state signal of the local board.

This step is the same as it in the prior art, so detailed descriptions are not given here.

Step 802: The control module of the standby main control board detects its Active/Standby state signal real-timely. If the Active/Standby state signal comes to be active, i.e., the on-site signal of the active main control board is detected as invalid, or in other words, the active main control board is pulled out or breaks down, the active main control board resets its hardware state change, and the standby main control board promotes its state as active and notifies a software system.

Step 803: The standby main control board opens the optical interface by which its interface module is connected to the optical line adapter to switchover itself as an active main control board. By performing this step, the main control board in an active state is connected to the active main control board in the adjacent DSLAM.

The second Active/Standby switchover method includes: the Active/Standby switchover being finished inside each communication device wherein the switchover procedure is as shown in Figure 9. Figure 9 is a flowchart illustrating the second Active/Standby switchover method of the main control board in the embodiment shown in Figure 3. This procedure includes the following steps:
Step 901: The active main control board confirms that Active/Standby switchover is needed. For instance, in the case of maintenance or software update or etc, the active main control board may determine to implement Active/Standby switchover according to user input.
Step 902: The active main control board notifies the standby main control board that Active/Standby switchover is needed, and meanwhile, sets the Active/Standby state single of the Active/Standby detection module of the local board as standby.
In this step, the control module of the active main control board can notify the control module of the standby main control board through a backboard bus that Active/Standby switchover is needed.
Step 903: The standby main control board sets its state as active according to the notification from the active main control board.
Step 904: The control module of the active main control board detects the Active/Standby state signal of the local board, and when detecting the signal as standby, closes the optical interface by which the active main control board is connected to the optical line adapter, in order to switchover this active main control board to a standby main control board.

On the other hand, the control module of the standby main control board detects the Active/Standby state signal of the local board, and opens the optical interface by which the standby main control board is connected to the optical line adapter when detecting the signal as active, in order to switchover this board to active main control board.

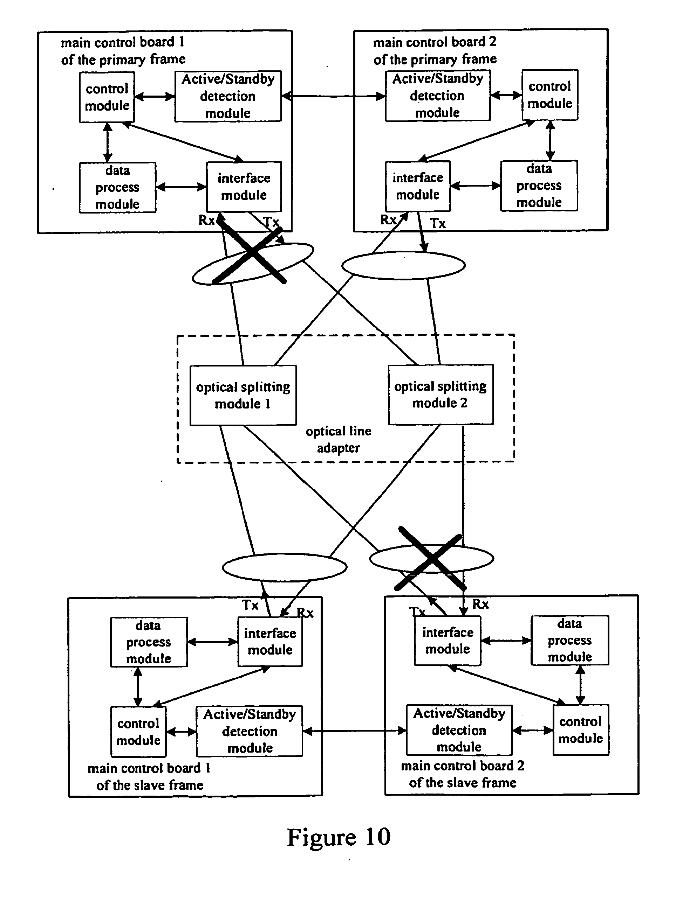

Suppose that the primary frame's main control board 1 breaks down. The Active/Standby switchover is performed by adopting one of the two methods mentioned above, and the optical paths after the switchover is as shown in Figure 10. Figure 10 is a schematic diagram illustrating the optical paths after performing the Active/Standby switchover upon the main control board of the primary frame in the embodiment shown in Figure 3. After the switchover, in the primary frame, the main control board 2 is an active main control board while the main control board 1 is a standby main control board, and the optical interface of the interface module in the main control board 2 is open while the optical interface of the interface module in the main control board 1 is closed. The optical splitting module 1 connects the interface module's RX of the primary frame's main control board 2 with the interface module's TX of the slave frame's main control board 1, and the optical splitting module 2 connects the interface module's TX of the primary frame's main control board 2 with the interface module's RX of the slave frame's main control board 1. In this way, optical signals can be transmitted between the primary frame's main control board 2 and the slave frame's main control board 1. Because the interface module's optical interface of the primary frame's main control board 1 and that of the slave frame's main control board 2 are closed, there is no optical signal transmitted between the primary frame's main control board 1 and the slave frame's main control board 2.

To sum up, for the present embodiment, when the primary frame is performing Active/Standby switchover, the slave frame does not have to perform Active/Standby switchover, so that the system is of higher reliability and stability. In addition, optical splitting parts are adopted in the present embodiment to connect the Active/Standby main control boards of the DSLAMs in various levels, so that besides the system is of higher reliability, the implementing costs of the present invention can be reduced.

The present invention is not only confined to the above-mentioned embodiments, but also applicable for any communication system of cascade devices, wherein if there are optical interfaces, the optical part in the above-mentioned embodiments can be used as the optical interfaces and if there are electric interfaces, any other part with similar function as the optical parts in the above-mentioned embodiments can be adopted.

## Claims

1. A communication system of cascaded devices with a backup function, at least comprising communication devices of various levels, each communication device at least comprising an active main control board and a standby main control board, and having an Active/Standby switchover function,
**characterized in that**
the communication system further comprises a line adapter with multiple inputs and multiple outputs, wherein
a first active main control board of the communication device in each level is connected to a second active main control board and a second standby main control board of an adjacent-level communication device through the line adapter, and a first standby main control board of the communication device in each level is connected to the second active main control board and the second standby main control board of the adjacent-level communication device through the line adapter;
a port in any active main control board which is connected to a first port of the line adapter is enabled while a port in any standby main control board which is connected to a second port of the line adapter is disabled.

2. The communication system according to Claim 1, wherein the line adapter is an optical line adapter or electric line adapter.

3. The communication system according to Claim 2, wherein the communication system is a Digital Subscriber Line, DSL, access system, the communication device is a Digital Subscriber Line Access Multiplexer, DSLAM, and the line adapter is an optical line adapter.

4. The communication system according to Claim 3, wherein the optical line adapter is an independent device which is separated from the DSLAM.

5. The communication system according to Claim 3, wherein the optical line adapter is a part of the DSLAM.

6. The communication system according to Claim 3, wherein the optical line adapter is set in an active main control board or standby main control board of the DSLAM.

7. The communication system according to Claim 2, wherein the number of the ports of the optical line adapter is no less than the number of the ports of interface modules in active main control boards and standby main control boards of two adjacent levels.

8. The communication system according to Claim 2, wherein the optical line adapter
comprises at least one independent optical splitting modules with multiple input ports and multiple output ports; or
the optical line adapter comprises at least one optical splitting modules with multiple input ports and a single output port, and/or optical splitting modules with multiple input ports and multiple output ports.

9. An Active/Standby switchover method of a communication system of cascaded devices, wherein, Active/Standby switchover is finished inside a communication device, an active main control board and standby main control board of the communication device detects the hardware state of each other in real time, and the switchover procedure comprises:
when detecting that the active main control board has been pulled out or broken down (801), the standby main control board promoting its local Active/Standby state as active (802);
**characterized in that** the method further comprises:
the standby main control board enabling its port which is connected to a port of the line adapter according to the Active/Standby state to switchover the standby main control board as an active main control board (803).

10. The method according to Claim 9, wherein either the active main control board or the standby main control board detects the hardware state of each other through its own Active/Standby detection module;
the step of the standby main control board promoting its local Active/Standby state as active comprises: the standby main control board setting its own Active/Standby state signal as active and sending this signal to the control module of the standby main control board; and
the step of the standby main control board enabling its port which is connected to the port of the line adapter according to the Active/Standby state to switchover the standby main control board as an active main control board comprises: the control module of the standby main control board real-timely detecting its local Active/Standby state signal, and if this signal is active, enabling the standby main control board's port which is connected to the port of the line adapter to switchover the local board as an active main control board.

11. The method according to Claim 9, wherein the communication system is a Digital Subscriber Line, DSL, access system, the communication device is a Digital Subscriber Line Access Multiplexer, DSLAM; the line adapter is an optical line adapter, and the port of the standby main control board which is connected to the port of the line adapter is an optical interface.

12. An Active/Standby switchover method of a communication system of cascaded devices, wherein Active/Standby switchover is finished inside a communication device including an active main control board and standby main control board, and the switchover procedure comprises:
the active main control board confirming that Active/Standby switchover is needed (901);
the active main control board notifying the standby main control board that Active/Standby switchover is needed; and setting its local Active/Standby state as standby (902);
according to the notification from the active main control board, the standby main control board setting its local Active/Standby state as active (903);
**characterized in that** the method further comprises:
the active main control board disabling its port which is connected to a first port of the line adapter to switchover the active main control board as a standby main control board according to the local Active/Standby state (904); and
the standby main control board enabling its port which is connected to a second port of the line adapter to switchover the standby main control board as an active main control board according to the local Active/Standby state (904).

13. The method according to Claim 12, wherein
the step of the active main control board setting its local Active/Standby state as standby comprises: setting the Active/Standby state of the Active/Standby detection module in the active main control board as standby;
the step of the standby main control board setting its local Active/Standby state as active comprises: setting the Active/Standby state of the Active/Standby detection module in the standby main control board as active;
the step of the active main control board disabling its port which is connected to the first port of the line adapter according to the local Active/Standby state comprises: the control module of the active main control board detecting its local Active/Standby state signal real-timely, and disabling its port which is connected to the first port of the line adapter if this signal is standby; and
the step of the standby main control board enabling its port which is connected to the second port of the line adapter according to the local Active/Standby state comprises: the control module of the standby main control board detecting its local Active/Standby state signal real-timely, and enabling its port which is connected to the second port of the line adapter if this signal is active.

14. The method according to Claim 12, wherein the communication system is a Digital Subscriber Line, DSL, access system, the communication device is a Digital Subscriber Line Access Multiplexer, DSLAM, the line adapter is an optical line adapter, and the ports of the active and standby main control boards which are connected to the first and second ports of the line adapter are optical interfaces.

## Patentansprüche

1. Kommunikationssystem kaskadierter Einrichtungen mit einer Backup-Funktion, das zumindest Kommunikationseinrichtungen verschiedener Ebenen umfasst, wobei jede Kommunikationseinrichtung mindestens eine Aktiv-Hauptsteuerungsplatine und eine Standby-Hauptsteuerungsplatine umfasst, und eine Aktiv/ Standby-Umschaltefunktion aufweist,
**dadurch gekennzeichnet, dass**
das Kommunikationssystem ferner einen Leitungsadapter mit mehreren Eingängen und mehreren Ausgängen umfasst, wobei eine erste Aktiv-Hauptsteuerungsplatine der Kommunikationseinrichtung in jeder Ebene durch den Leitungsadapter mit einer zweiten Aktiv-Hauptsteuerungsplatine und einer zweiten Standby-Hauptsteuerungsplatine einer Kommunikationseinrichtung einer benachbarten Ebene verbunden ist, und eine erste Standby-Hauptsteuerungsplatine der Kommunikationseinrichtung in jeder Ebene durch den Leitungsadapter mit der zweiten Aktiv-Hauptsteuerungsplatine und der zweiten Standby-Hauptsteuerungsplatine der Kommunikationseinrichtung einer benachbarten Ebene verbunden ist; ein Port in einer Aktiv-Hauptsteuerungsplatine, der mit einem ersten Port des Leitungsadapters verbunden ist, freigegeben ist, während ein Port in einer Standby-Hauptsteuerungsplatine, der mit einem zweiten Port des Leitungsadapters verbunden ist, gesperrt ist.

2. Kommunikationssystem nach Anspruch 1, wobei der Leitungsadapter ein optischer Leitungsadapter oder ein elektrischer Leitungsadapter ist.

3. Kommunikationssystem nach Anspruch 2, wobei das Kommunikationssystem ein Zugriffssystem einer digitalen Teilnehmerleitung, DSL-Zugriffssystem, ist, die Kommunikationseinrichtung ein Zugriffsmultiplexer einer digitalen Teilnehmerleitung, DSLAM, ist, und der Leitungsadapter ein optischer Leitungsadapter ist.

4. Kommunikationssystem nach Anspruch 3, wobei der optische Leitungsadapter eine unabhängige Einrichtung ist, die von dem DSLAM getrennt ist.

5. Kommunikationssystem nach Anspruch 3, wobei der optische Leitungsadapter ein Teil des DSLAM ist.

6. Kommunikationssystem nach Anspruch 3, wobei der optische Leitungsadapter in einer Aktiv-Hauptsteuerungsplatine oder einer Standby-Hauptsteuerungsplatine des DSLAM festgelegt ist.

7. Kommunikationssystem nach Anspruch 2, wobei die Anzahl der Ports des optischen Leitungsadapters nicht kleiner ist als die Anzahl der Ports von Schnittstellenmodulen in Aktiv-Hauptsteuerungsplatinen und Standby-Hauptsteuerungsplatinen zweier benachbarter Ebenen.

8. Kommunikationssystem nach Anspruch 2, wobei der optische Leitungsadapter mindestens ein unabhängiges optisches Aufspaltungsmodul mit mehreren Eingangsports und mehreren Ausgangsports umfasst; oder
der optische Leitungsadapter mindestens ein optisches Aufspaltungsmodul mit mehreren Eingangsports und einem einzelnen Ausgangsport und/oder ein optisches Aufspaltungsmodul mit mehreren Eingangsports und mehreren Ausgangsports umfasst.

9. Aktiv/ Standby-Umschalteverfahren eines Kommunikationssystems kaskadierter Einrichtungen, bei dem ein Aktiv/ Standby-Umschalten in einer Kommunikationseinrichtung abgeschlossen wird, eine Aktiv-Hauptsteuerungsplatine und eine Standby-Hauptsteuerungsplatine der Kommunikationseinrichtung gegenseitig den Hardware-Status in Echtzeit detektieren und die Umschalteprozedur umfasst, dass,
wenn detektiert wird, dass die Aktiv-Hauptsteuerungsplatine herausgezogen wurde oder ausgefallen ist (801), die Standby-Hauptsteuerungsplatine ihren lokalen Aktiv/ Standby-Status als aktiv fördert (802);
**dadurch gekennzeichnet, dass** das Verfahren ferner umfasst, dass die Standby-Hauptsteuerungsplatine ihren Port, der mit einem Port des Leitungsadapters verbunden ist, gemäß dem Aktiv/Standby-Status freigibt, um die Standby-Hauptsteuerungsplatine als Aktiv-Hauptsteuerungsplatine umzuschalten (803).

10. Verfahren nach Anspruch 9, wobei entweder die Aktiv-Hauptsteuerungsplatine oder die Standby-Hauptsteuerungsplatine durch ihr eigenes Aktiv/Standby-Detektionsmodul den gegenseitigen Hardware-Status detektiert;
der Schritt, dass die Standby-Hauptsteuerungsplatine ihren lokalen Aktiv/Standby-Status als aktiv fördert, umfasst, dass die Standby-Hauptsteuerungsplatine ihr eigenes Aktiv/ Standby-Statussignal als aktiv festlegt und dieses Signal an das Steuermodul der Standby-Hauptsteuerungsplatine sendet; und
der Schritt, dass die Standby-Hauptsteuerungsplatine ihren Port, der mit dem Port des Leitungsadapters verbunden ist, gemäß dem Aktiv/ Standby-Status freigibt, um die Standby-Hauptsteuerungsplatine als Aktiv-Hauptsteuerungsplatine umzuschalten, umfasst, dass das Steuermodul der Standby-Hauptsteuerungsplatine in Echtzeit ihr lokales Aktiv/ Standby-Statussignal detektiert und, wenn dieses Signal aktiv ist, den Port der Standby-Hauptsteuerungsplatine, der mit dem Port des Leitungsadapters verbunden ist, freigibt, um die lokale Platine als Aktiv-Hauptsteuerungsplatine umzuschalten.

11. Verfahren nach Anspruch 9, wobei das Kommunikationssystem ein Zugriffssystem einer digitalen Teilnehmerleitung, DSL-Zugriffssystem, ist, die Kommunikationseinrichtung ein Zugriffsmultiplexer einer digitalen Teilnehmerleitung, DSLAM, ist, der Leitungsadapter ein optischer Leitungsadapter ist und der Port der Standby-Hauptsteuerungsplatine, der mit dem Port des Leitungsadapters verbunden ist, eine optische Schnittstelle ist.

12. Aktiv/Standby-Umschalteverfahren eines Kommunikationssystems kaskadierter Einrichtungen, bei dem ein Aktiv/ Standby-Umschalten in einer Kommunikationseinrichtung abgeschlossen wird, die eine Aktiv-Hauptsteuerungsplatine und eine Standby-Hauptsteuerungsplatine umfasst, und die Umschalteprozedur umfasst, dass die Aktiv-Hauptsteuerungsplatine bestätigt, dass ein Aktiv/Standby-Umschalten erforderlich ist (901);
die Aktiv-Hauptsteuerungsplatine der Standby-Hauptsteuerungsplatine mitteilt, dass ein Aktiv/Standby-Umschalten erforderlich ist; und ihren lokalen Aktiv/ Standby-Status als Standby festlegt (902); die Standby-Hauptsteuerungsplatine gemäß der Mitteilung von der Aktiv-Hauptsteuerungsplatine ihren lokalen Aktiv/ Standby-Status als aktiv festlegt (903);
**dadurch gekennzeichnet, dass** das Verfahren ferner umfasst, dass die Aktiv-Hauptsteuerungsplatine ihren Port, der mit einem ersten Port des Leitungsadapters verbunden ist, gemäß dem lokalen Aktiv/Standby-Status sperrt, um die Aktiv-Hauptsteuerungsplatine als Standby-Hauptsteuerungsplatine umzuschalten (904); und
die Standby-Hauptsteuerungsplatine ihren Port, der mit einem zweiten Port des Leitungsadapters verbunden ist, gemäß dem lokalen Aktiv/Standby-Status freigibt, um die Standby-Hauptsteuerungsplatine als Aktiv-Hauptsteuerungsplatine umzuschalten (904).

13. Verfahren nach Anspruch 12, wobei
der Schritt, dass die Aktiv-Hauptsteuerungsplatine ihren lokalen Aktiv/ Standby-Status als Standby festlegt, umfasst, dass der Aktiv/Standby-Status des Aktiv/Standby-Detektionsmoduls in der Aktiv-Hauptsteuerungsplatine als Standby festgelegt wird;
der Schritt, dass die Standby-Hauptsteuerungsplatine ihren lokalen Aktiv/Standby-Status als aktiv festlegt, umfasst, dass der Aktiv/Standby-Status des Aktiv/Standby-Detektionsmoduls in der Standby-Hauptsteuerungsplatine als aktiv festgelegt wird;
der Schritt, dass die Aktiv-Hauptsteuerungsplatine ihren Port, der mit dem ersten Port des Leitungsadapters verbunden ist, gemäß dem lokalen Aktiv/Standby-Status sperrt, umfasst, dass das Steuermodul der Aktiv-Hauptsteuerungsplatine ihr lokales Aktiv/Standby-Statussignal in Echtzeit detektiert und ihren Port, der mit dem ersten Port des Leitungsadapters verbunden ist, sperrt, wenn dieses Signal einen Standby angibt; und
der Schritt, dass die Standby-Hauptsteuerungsplatine ihren Port, der mit dem zweiten Port des Leitungsadapters verbunden ist, gemäß dem lokalen Aktiv/Standby-Status freigibt, umfasst, dass das Steuermodul der Standby-Hauptsteuerungsplatine ihr lokales Aktiv/ Standby-Statussignal in Echtzeit detektiert und ihren Port, der mit dem zweiten Port des Leitungsadapters verbunden ist, freigibt, wenn dieses Signal aktiv ist.

14. Verfahren nach Anspruch 12, wobei das Kommunikationssystem ein Zugriffssystem einer digitalen Teilnehmerleitung, DSL-Zugriffssystem, ist, die Kommunikationseinrichtung ein Zugriffsmultiplexer einer digitalen Teilnehmerleitung, DSLAM, ist, der Leitungsadapter ein optischer Leitungsadapter ist und die Ports der Aktiv- und Standby-Hauptsteuerungsplatinen, die mit den ersten und zweiten Ports des Leitungsadapters verbunden sind, optische Schnittstellen sind.

## Revendications

1. Système de communication de dispositifs en cascade avec une fonction de secours, comportant au moins des dispositifs de communication de divers niveaux, chaque dispositif de communication comportant au moins une carte de commande principale active et une carte de commande principale d'attente, et ayant une fonction Activité/Attente,
**caractérisé en ce que**
le système de communication comporte en outre un adaptateur de ligne ayant de multiples entrées et de multiples sorties, dans lequel
une première carte de commande principale active du dispositif de communication dans chaque niveau est connectée à une seconde carte de commande principale active et à une seconde carte de commande principale d'attente d'un dispositif de communication d'un niveau adjacent par l'intermédiaire de l'adaptateur de ligne, et une première carte de commande principale d'attente du dispositif de communication dans chaque niveau est connectée à la seconde carte de commande principale active et à la seconde carte de commande principale d'attente du dispositif de communication d'un niveau adjacent par l'intermédiaire de l'adaptateur de ligne ;
un port dans n'importe quelle carte de commande principale active qui est connecté à un premier port de l'adaptateur de ligne est validé tandis qu'un port dans n'importe quelle carte de commande principale d'attente qui est connecté à un second port de l'adaptateur de ligne est invalidé.

2. Système de communication selon la revendication 1, dans lequel l'adaptateur de ligne est un adaptateur de ligne optique ou un adaptateur de ligne électrique.

3. Système de communication selon la revendication 2, lequel système de communication est un système d'accès à une ligne d'abonné numérique, DSL (pour « Digital Subscriber Line »), est un multiplexeur à accès de ligne d'abonné numérique, DSLAM (pour Digital Subscriber Line Access Multiplexer »), et l'adaptateur de ligne est un adaptateur de ligne optique.

4. Système de communication selon la revendication 3, dans lequel l'adaptateur de ligne optique est un dispositif indépendant qui est séparé du DSLAM.

5. Système de communication selon la revendication 3, dans lequel l'adaptateur de ligne optique fait partie du DSLAM.

6. Système de communication selon la revendication 3, dans lequel l'adaptateur de ligne optique est établi dans une carte de commande principale active ou dans une carte de commande principale d'attente du DSLAM.

7. Système de communication selon la revendication 2, dans lequel le nombre des ports de l'adaptateur de ligne optique n'est pas inférieur au nombre des ports de modules d'interface liés dans des cartes de commande principale active et des cartes de commande principale d'attente de deux niveaux adjacents.

8. Système de communication selon la revendication 2, dans lequel l'adaptateur de ligne optique comporte au moins un module de division optique indépendant ayant de multiples ports d'entrée et de multiples ports de sortie ; ou
l'adaptateur de ligne optique comporte au moins un module de division optique ayant de multiples ports d'entrée et un seul port de sortie, et/ou des modules de division optique ayant de multiples ports d'entrée et de multiples ports de sortie.

9. Procédé d'inversion Activité/Attente d'un système de communication de dispositifs en cascade, dans lequel un inverseur Activité/Attente aboutit à l'intérieur d'un dispositif de communication, une carte de commande principale active et une carte de commande principale d'attente du dispositif de communication détectent mutuellement leur état matériel en temps réel, et la procédure d'inversion comprend :
lorsqu'il est détecté que la carte de commande principale active a été extraite ou cassée (801), la carte de commande principale d'attente promeut son état Activité/Attente local comme actif (802) ;
le procédé étant **caractérisé en ce qu'**il comprend en outre :
la validation par la carte de commande principale d'attente de son port qui est connecté à un port de l'adaptateur de ligne conformément à l'état Activité/Attente pour inverser la carte de commande principale d'attente en tant que carte de commande principale active (803).

10. Procédé selon la revendication 9, dans lequel soit la carte de commande principale active, soit la carte de commande principale d'attente détecte l'état matériel de l'autre à travers son propre module de détection d'Activité/Attente ;
l'étape dans laquelle la carte de commande principale d'attente promeut son état Activité/Attente local en tant qu'actif comprend : l'établissement par la carte de commande principale d'attente de son propre signal d'état Activité/Attente en tant qu'actif et l'envoi de ce signal au module de commande de la carte de commande principale d'attente ; et
l'étape de validation par la carte de commande principale d'attente de son port qui est connecté au port de l'adaptateur de ligne conformément à l'état Activité/Attente pour inverser la carte de commande principale d'attente en tant que carte de commande principale active comprend : la détection en temps réel par le module de commande de la carte de commande principale d'attente de son signal d'état Activité/Attente local, et, si ce signal est actif, la validation du port de la carte de commande principale d'attente qui est connecté au port de l'adaptateur de ligne pour inverser la carte locale en tant que carte de commande principale active.

11. Procédé selon la revendication 9, dans lequel le système de communication est un système d'accès à une ligne d'abonné numérique, DSL, le dispositif de communication est un multiplexeur d'accès à une ligne d'abonné numérique, DSLAM ; l'adaptateur de ligne est un adaptateur de ligne optique, et le port de la carte de commande principale d'attente qui est connecté au port de l'adaptateur de ligne est une interface optique.

12. Procédé d'inversion Activité/Attente d'un système de communication de dispositifs en cascade, dans lequel un inverseur Activité/Attente aboutit à l'intérieur d'un dispositif de communication comprenant une carte de commande principale active et une carte de commande principale d'attente, et la procédure d'inversion comprend :
le fait que la carte de commande principale active confirme que l'inverseur Activité/Attente est nécessaire (901) ;
le fait que la carte de commande principale active notifie à la carte de commande principale d'attente qu'une inversion Activité/Attente est nécessaire ; et qu'elle établit son état Activité/Attente local en attente (902) ;
conformément à la notification provenant de la carte de commande principale active, le fait que la carte de commande principale d'attente établit comme actif son état Activité/Attente local (903) ;
le procédé étant **caractérisé en ce qu'**il comprend en outre :
le fait que la carte de commande principale active invalide son port qui est connecté à un premier port de l'adaptateur de ligne pour inverser la carte de commande principale active en tant que carte de commande principale d'attente conformément à l'état Activité/Attente local (904) ; et
le fait que la carte de commande principale d'attente valide son port qui est connecté à un second port de l'adaptateur de ligne pour inverser la carte de commande principale d'attente en tant que carte de commande principale active conformément à l'état Activité/Attente local (904).

13. Procédé selon la revendication 12, dans lequel
l'étape par laquelle la carte de commande principale active établit son état Activité/Attente local comme attente comprend : l'établissement de l'état Activité/Attente du module de détection d'Activité/Attente en tant que attente dans la carte de commande principale active ;
l'étape d'établissement par la carte de commande principale d'attente de son état d'Activité/Attente local comme actif comprend : l'établissement de l'état Activité/Attente du module de détection d'Activité/Attente dans la carte de commande principale d'attente comme actif ;
l'étape d'invalidation par la carte de commande principale active de son port qui est connecté au premier port de l'adaptateur de ligne conformément à l'état d'Activité/Attente local comprend : le fait que le module de commande de la carte de commande principale active détecte son signal d'état d'Activité/Attente local en temps réel, et invalide son port qui est connecté au premier port de l'adaptateur de ligne si ce signal est l'attente ; et
l'étape par laquelle la carte de commande principale d'attente valide son port qui est connecté au second port de l'adaptateur de ligne en fonction de l'état d'Activité/Attente local comprend : le fait que le module de commande de la carte de commande principale d'attente détecte son signal d'état Activité/Attente local en temps réel, et valide son port qui est connecté au second port de l'adaptateur de ligne si ce signal est actif.

14. Procédé selon la revendication 12, dans lequel le système de communication est un système d'accès à une ligne d'abonné numérique, DSL, le dispositif de communication est un multiplexeur d'accès à une ligne d'abonné numérique, DSLAM, l'adaptateur de ligne est un adaptateur de ligne optique, et les ports des cartes de commande principale active d'attente qui sont connectés aux premier et second ports de l'adaptateur de ligne sont des interfaces optiques.
